Europäisches Patentamt

European Patent Office

Office européen des brevets

(19)

(11) Numéro de publication: **0 228 306**
**B1**

(12) **FASCICULE DE BREVET EUROPEEN**

(45) Date de publication du fascicule du brevet:
**06.06.90**

(51) Int. Cl.⁵: **B63B 1/18**, B63B 1/38

(21) Numéro de dépôt: **86400002.1**

(22) Date de dépôt: **02.01.86**

(54) **Coque de navire avec faible résistance à l'avancement.**

(43) Date de publication de la demande:
**08.07.87 Bulletin 87/28**

(45) Mention de la délivrance du brevet:
**06.06.90 Bulletin 90/23**

(84) Etats contractants désignés:
**AT BE CH DE GB IT LI LU NL SE**

(56) Documents cités:
**EP-A- 0 105 819**
**WO-A-84/04903**
**CA-A- 894 009**
**CH-A- 394 851**
**FR-A- 2 571 330**

(73) Titulaire: **SOCIETE FRANCAISE DE CONSTRUCTIONS NAVALES, 66, quai Alfred Sisley, F-92390 VILLENEUVE LA GARENNE(FR)**

(72) Inventeur: **Gaudin, Christian Alain, 2, rue du Parc aux Oiseaux, F-95270 Asnieres sur Oise(FR)**

(74) Mandataire: **Chameroy, Claude et al, c/o Cabinet Malemont 42, avenue du Président Wilson, F-75116 Paris(FR)**

## Description

La présente invention concerne une coque de navire perfectionnée présentant une faible résistance à l'avancement aux grandes vitesses.

On peut distinguer actuellement deux catégories de navires, à savoir, les navires dits "fins", dont le rapport longueur sur largeur est de l'ordre de 6 à 10, et les navires dits "larges", dont le rapport longueur sur largeur est de l'ordre de 3 à 5. Les navires fins ont une faible résistance à l'avancement, mais ne sont pas très manœuvrables, ni très logeables. En revanche, les navires larges présentent une grande manœuvrabilité, une grande logeabilité, ainsi qu'une grande stabilité à la mer, mais également une grande résistance à l'avancement, de sorte qu'à vitesse égale, ils nécessitent des puissances propulsives plus élevées. De tels navires, dits "larges", sont décrits par exemple dans CH-A 394 851 ou dans WO 84/04 903.

La présente invention a donc pour but principal de réaliser une coque perfectionné présentant à la fois les avantages des navires fins et ceux des navires larges.

A cet effet, la coque selon l'invention comprenant une étrave en V et deux redans longitudinaux disposés symétriquement par rapport au plan vertical médian du navire, est essentiellement caractérisée en ce que l'angle du V, très aigu vers l'avant, s'ouvre progressivement jusqu'à devenir pratiquement nul à l'arrière, tandis que les deux redans longitudinaux délimitent un canal axial incliné longitudinalement selon un angle qui s'ouvre vers l'arrière par rapport à la ligne de flottaison du navire au repos, cet angle d'inclinaison étant calculé de manière que ledit canal axial soit pratiquement parallèle à la ligne de flottaison lors que le navire déjauge sous l'effet de la vitesse.

De préférence, un volet fixe ou mobile est prévu à l'arrière du navire pour régler son assiette à une valeur positive correspondant sensiblement à l'angle d'inclinaison du canal axial.

Grâce à cet ensemble de dispositions, dès que le navire atteint une certaine vitesse, il déjauge en prenant une assiette positive de l'ordre de 1 à 3 degrés, de sorte que le canal axial présente alors une incidence pratiquement nulle. Dans ces conditions, la poussée hydrodynamique s'exerce essentiellement sur les surfaces de la coque extérieure aux redans, tandis que le canal axial n'est soumis qu'à une faible pression hydrostatique. On peut ainsi réaliser des navires larges et néanmoins très rapides.

Dans une forme de réalisation particulière de l'invention, de l'air sous pression est insufflé par des fentes dans le canal axial, afin de constituer une lame d'air s'écoulant naturellement de l'avant vers l'arrière entre les redans.

Cette lame d'air réalise une lubrification de la partie correspondante de la coque qui diminue considérablement la résistance de frottement aux vitesses élevées.

Une forme d'exécution de l'invention est décrite ci-après à titre d'exemple, en référence aux dessins annexés dans lesquels:

– la figure 1 est une vue de côté simplifiée d'un navire réalisé conformément à l'invention, représenté au repos;
– la figure 2 est une vue en coupe longitudinale du même navire, représenté en marche et à vitesse élevée;
– la figure 3 est une vue de l'avant du navire;
– la figure 4 est une vue de l'arrière du navire;
– la figure 5 est une vue en coupe transversale suivant la ligne V–V de la figure 1; et

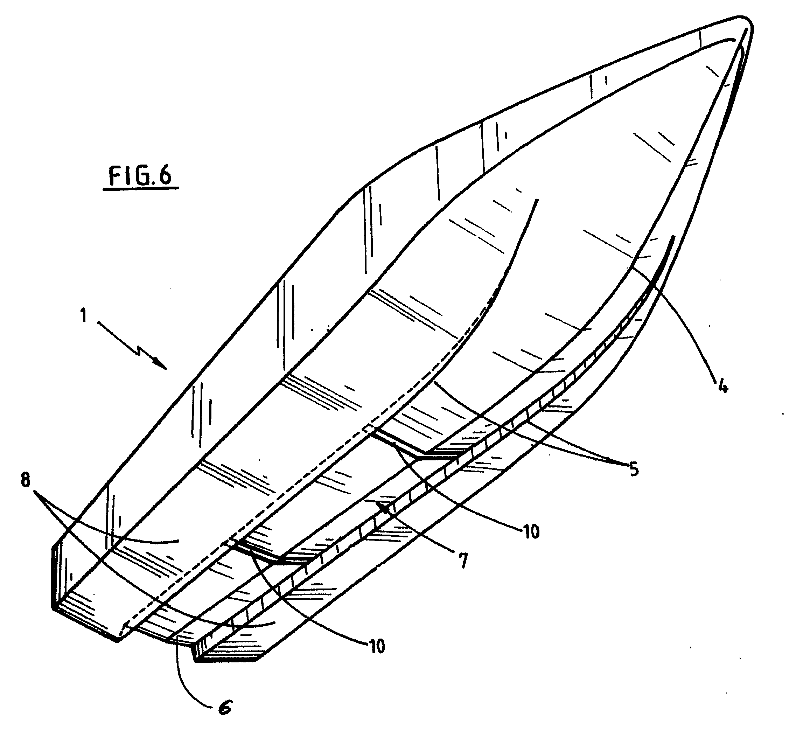

– la figure 6 est une vue en perspective du dessous de la coque selon l'invention.

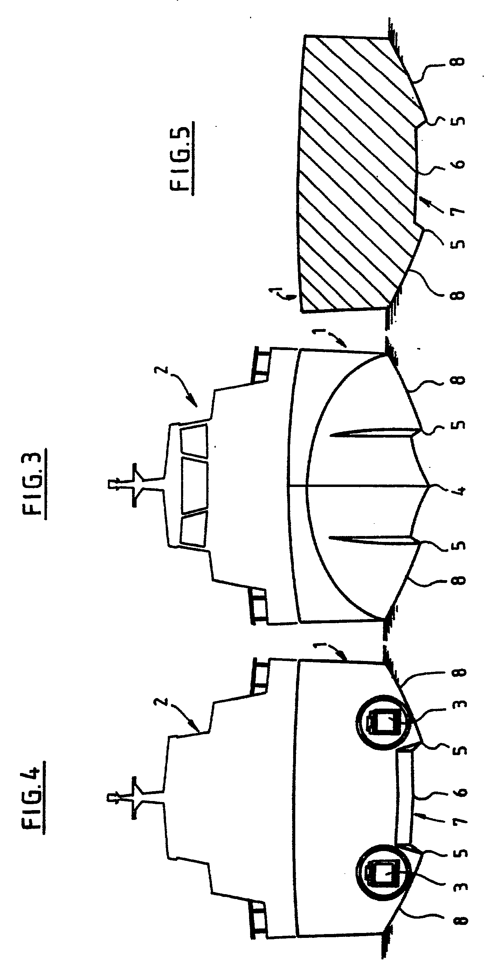

Le navire représenté sur ces figures se compose essentiellement d'une coque 1 et d'une superstructure désignée dans son ensemble par la référence 2. Sa propulsion est assurée de manière classique, par exemple au moyen de deux propulseurs du type "Waterjet", comme représenté en 3 sur la figure 4.

Conformément à l'invention, la coque 1 comprend une étrave 4 en forme de V et deux redans longitudinaux 5, disposés symétriquement par rapport au plan vertical médian du navire.

L'étrave en V 4 se prolonge d'une manière continue jusqu'à l'arrière du navire. Toutefois, l'angle du V, qui est très aigu vers l'avant, s'ouvre progressivement jusqu'à devenir pratiquement nul à l'arrière, comme représenté en 6 sur les figures 4 et 5.

Les deux redans longitudinaux 5 délimitent ainsi, approximativement à partir du tiers avant du navire, un canal axial 7 dont l'arête du fond 6 est inclinée longitudinalement selon un angle $\alpha$ qui s'ouvre vers l'arrière par rapport à la ligne de flottaison du navire au repos. En pratique, cet angle d'inclinaison $\alpha$ est d'environ 2°.

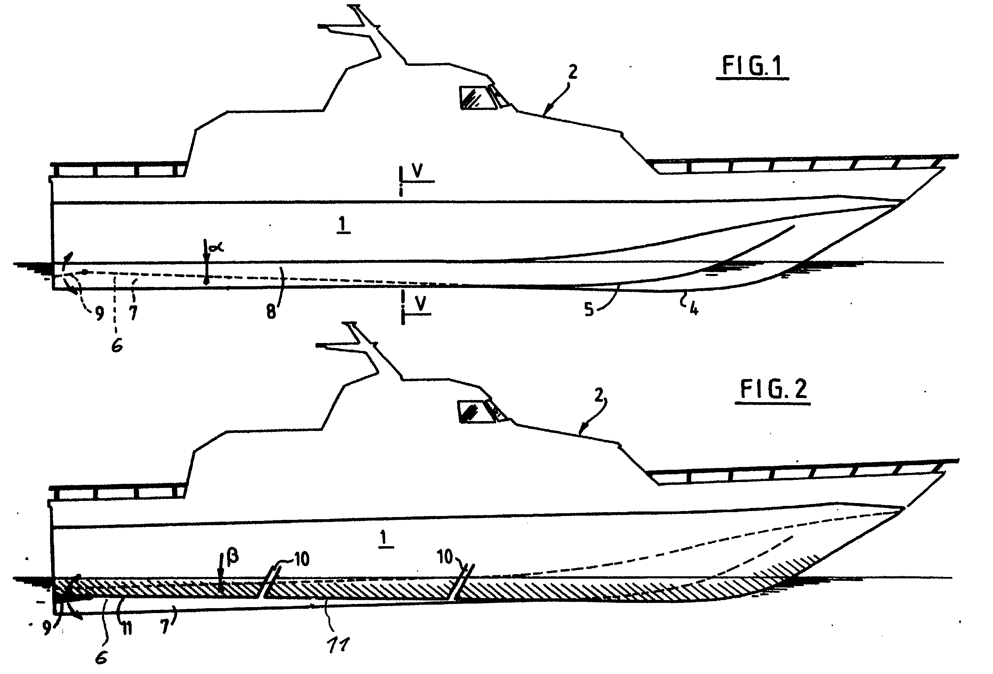

Au repos ou à faible vitesse, le navire prend appui sur l'eau par toute la surface mouillée de sa coque, comme représenté sur la figure 1. Par contre, dès qu'il atteint une certaine vitesse, le navire déjauge en prenant une assiette positive $\beta$ sensiblement égale à $\alpha$, comme représenté sur la figure 2. Les surfaces latérales 8 des redans 5, qui avaient au repos une incidence horizontale nulle, présentent alors une incidence positive de l'ordre de 1 à 3 degrés, tandis que le canal axial 7, qui avait au repos une pente négative d'environ 2°, présente alors une incidence pratiquement nulle. Un volet fixe ou mobile 9, communément désigné sous le nom de "flap", pourra d'ailleurs avantageusement être placé à l'arrière de la coque 1 afin de permettre un réglage plus précis de l'assiette du navire.

Dans ces conditions, la poussée hydrodynamique s'exerce essentiellement sur les surfaces latérales 8 des redans 5. En effet, le canal axial 7 n'est alors soumis qu'à une pression hydrostatique faible et constante, puisqu'il est sensiblement horizontal et faiblement immergé.

Selon une autre caractéristique de l'invention, de l'air sous pression est insufflé sous la coque par des fentes 10, afin de former dans le canal axial 7 une lame d'air 11 permettant de "lubrifier" cette partie de la coque située entre les redans 5 et qui n'est soumise qu'à une pression hydrostatique faible et constante. Cette "lubrification" par une lame d'air 11 diminue de façon très importante, aux vitesses élevées, la résistance de frottement de la coque, laquelle se comporte alors comme un catamaran dont les deux coques seraient constituées par les parties 8 des redans 5.

Bien entendu, une telle lubrification ne présente véritablement un intérêt que pour les vitesses élevées, car aux faibles vitesses, la résistance de frottement est négligeable par rapport à la résistance de rencontre. Il convient par ailleurs de noter que la lame d'air 11 a pour unique objet de lubrifier une partie de la coque. Elle s'écoule naturellement de l'avant vers l'arrière entre les redans 5 et ne sert absolument pas à la sustentation du navire, comme c'est le cas par exemple dans les navires dits "à coussin d'air". La puissance nécessaire à la formation de la lame d'air 11 est d'ailleurs très faible et ne représente que quelques pour cent de la puissance propulsive.

La coque perfectionnée selon l'invention permet donc en définitive de réunir à la fois les avantages des navires fins et ceux des navires larges. Elle trouve son application dans la construction de bateaux rapides pour lesquels on recherche simultanément, une bonne tenue à la mer, une très bonne manoeuvrabilité, ainsi qu'une largeur suffisamment grande pour permettre l'installation dans de bonnes conditions d'aménagements pour passagers, par exemple dans le cas de vedettes touristiques, ou de matériels divers, comme dans le cas de vedettes militaires, de vedettes de sauvetage, ou autres.

**Revendications**

1. Coque de navire perfectionnée, comprenant une étrave (4) en V et deux redans longitudinaux (5) disposés symétriquement par rapport au plan vertical médian du navire, caractérisée en ce que l'angle du V, très aigu vers l'avant, s'ouvre progressivement jusqu'à devenir pratiquement nul à l'arrière (6), tandis que les deux redans longitudinaux (5) délimitent un canal axial (7) incliné longitudinalement selon un angle (α) qui s'ouvre vers l'arrière par rapport à la ligne de flottaison du navire au repos, cet angle d'inclinaison (α) étant calculé de manière que ledit canal axial (7) soit pratiquement parallèle à la ligne de flottaison lorsque le navire déjauge sous l'effet de la vitesse.

2. Coque selon la revendication 1, caractérisée en ce qu'un volet fixe ou mobile (9) est prévu à l'arrière du navire pour régler son assiette à une valeur positive correspondant sensiblement à l'angle d'inclinaison (α) du canal axial (7).

3. Coque selon la revendication 1, caractérisée en ce que de l'air sous pression est insufflé par des fentes (10) dans le canal axial (7), afin de constituer une lame d'air (11) s'écoulant naturellement de l'avant vers l'arrière entre les redans (5).

**Claims**

1. An improved ship's hull comprising a V-shaped stem (4) and two longitudinal baffles (5) placed symmetrically with respect to the median vertical plane of the vessel, characterized in that the angle of the V, which is very acute in the front, opens progressively until it becomes practically zero at the rear (6), while the two longitudinal baffles (5) define an axial channel (7) inclined longitudinally at an angle (α) which opens rearward with respect to the water line of the ship at rest, said angle of inclination (α) being designed so that the axial channel (7) is practically parallel to the water line, when the vessel is suing up under the effect of speed.

2. The hull according to Claim 1, characterized in that a stationary or mobile flap (9) is provided at the rear of the ship to regulate its rim at a positive value essentially corresponding to the angle of inclination (α) of the axial channel (7).

3. The hull according to Claim 1, characterized in that pressure air is blown through slots (10) in the axial channel (7), in order to form a sheet of air (11) flowing naturally from front to rear between the baffles (5).

**Patentansprüche**

1. Verbesserter Schiffsrumpf bestehend aus einem V-Vordersteven (4) und zwei Längsstufen (5), die symmetrisch zur senkrechten Mittelebene des Schiffes angeordnet sind, dadurch gekennzeichnet, daß der V-Winkel, der nach vorne sehr spitz ist, sich allmählich öffnet, um nach hinten praktisch null zu werden (6), während die zwei Längsstufen (5) einen axial angeordneten Kanal (7) begrenzen, der sich mit einem Winkel (α) nach hinten zur Wasserlinie des ruhenden Schiffes öffnet, wobei dieser Neigungswinkel (α) derart berechnet ist, daß der besagte axial angeordnete Kanal (7) praktisch parallel zur Wasserlinie ist, wenn sich das Schiff unter der Wirkung der Geschwindigkeit aus dem Wasser hebt.

2. Schiffsrumpf entsprechend Anspruch 1, dadurch gekennzeichnet, daß eine feste oder bewegliche Klappe (9) am Heck des Schiffes vorgesehen ist, um seine Trimmung auf einen positiven Wert einzustellen, der ziemlich dem Neigungswinkel (α) des Längskanals (7) entspricht.

3. Schiffsrumpf entsprechend Anspruch 1, dadurch gekennzeichnet, daß die Druckluft durch Schlitze (10) in den Längskanal (7) geblasen wird, um eine Luftschicht (11) zu bilden, die natürlicherweise von vorne nach hinten zwischen den Stufen (5) fließt.

FIG.1

FIG.2

EP 0 228 306 B1

FIG.4

FIG.3

FIG.5

2

2

1

1

1

8  3  5  7  6  5  3  8

8  5  4  5  8

8  5  7  6  5  8

EP 0 228 306 B1

FIG.6

EP 0 228 306 B1